(19) Europäisches Patentamt
European Patent Office
Office européen des brevets

(11) EP 4 552 819 A1

(12) **EUROPEAN PATENT APPLICATION**

(43) Date of publication:
**14.05.2025 Bulletin 2025/20**

(21) Application number: **23209070.4**

(22) Date of filing: **10.11.2023**

(51) International Patent Classification (IPC):
***B29C 45/00*** *(2006.01)* ***B29C 45/14*** *(2006.01)*
***B29K 69/00*** *(2006.01)* ***B29K 71/00*** *(2006.01)*
***B29K 705/00*** *(2006.01)* ***C08L 69/00*** *(2006.01)*
***C08L 71/00*** *(2006.01)*

(52) Cooperative Patent Classification (CPC):
(C-Sets available)
**B29C 45/0001; B29C 45/14336; C08L 69/00; C08L 71/00;** B29K 2069/00; B29K 2071/00; B29K 2705/00; B29K 2995/0039 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Covestro LLC**
**Pittsburgh, PA 15205-9741 (US)**

(72) Inventors:
- **Archer, Emily**
  **Washington, 15301 (US)**
- **Immormino, Anthony**
  **Pittsburgh, 15229 (US)**
- **Davis, Terry**
  **Kimball, 48074-4523 (US)**

(74) Representative: **Levpat**
**c/o Covestro AG**
**Gebäude K12**
**51365 Leverkusen (DE)**

(54) **PLATE METAL INSERT MOLDING WITH POLYCARBONATE AND POLYCARBONATE BLENDS**

(57) Provided is a metal insert molding comprising a metal insert molding comprising a metal plate encapsulated in a thermoplastic resin composition comprising, (a) an aromatic polycarbonate, (b) a polyether polyol and optionally, (c) at least one additive selected from the group consisting of flame retardants, antidripping agents, impact modifiers, fillers, antistats, coloring agents, pigments, thermal stabilizers different from component (b), lubricants, demolding agents, ultraviolet absorbers, infrared absorbers, hydrolysis stabilizers, and compatibilizers; and wherein the metal insert molding has a horizontal thickness (A) of from 1.0X to 6.3X, a bite/interface depth (B) of 1.5X, and a vertical thickness (C) of from 1.5X to 2.5X. The inventive metal insert moldings can provide parts for a variety of industries including automotive, electronics, and medical devices.

EP 4 552 819 A1

(52) Cooperative Patent Classification (CPC): (Cont.)

C-Sets
**C08L 69/00, C08L 71/02**

**Description**

## FIELD OF THE INVENTION

The present invention relates in general to insert molding and more specifically to plate metal insert molding processes with polycarbonates and polycarbonate blends.

## BACKGROUND OF THE INVENTION

Insert molding involves loading a preformed part, also known as an insert, into a mold where plastic is injected around to encapsulate the insert in molded plastic. This process creates a finished product as contrasted with overmolding, which produces a final part using two separate shots of plastic. The insert can be made of various materials, including metals, ceramics, or other plastic materials, and is placed into a mold cavity before the plastic resin is injected around it. In metal insert molding processes, the preformed part is made of metal. Insert molding processes produce parts with improved functional or mechanical properties versus overmolded parts.

One of the problems that occurs where people attempt metal insert molding relates to the plastic employed. Metal insert molding is considered possible by those in the art with semicrystalline materials, such as linear polyethylene (PE), polyethylene terephthalate (PET), polytetrafluoroethylene (PTFE) and isotactic polypropylene (PP).

Amorphous materials such as polycarbonate, however, have met with more limited success in metal insert molding processes. Metal insert molding with polycarbonate is usually not recommended for a variety of reasons including polycarbonate being stress sensitive; a mismatch of thermal expansion between plastic and metal; and processing can be difficult depending on specific polycarbonate/ polycarbonate blends. The lack of processes and guidance for metal insert molding with polycarbonate is a cross-industry problem as polycarbonate solutions are highly promoted in battery packing, electrical and electronics integration, select medical applications, and traditional mobility applications.

To reduce or eliminate such problems, therefore, a need continues to exist in the art for a new process for molding metal inserts in amorphous plastics, such as polycarbonate and polycarbonate blends.

## SUMMARY OF THE INVENTION

Accordingly, the present invention enables the use of polycarbonates and polycarbonate blends in metal insert molding processes. Polycarbonates and polycarbonate blends can be used in metal insert molding if it is done under specific design, processing, and materials selection. The inventive metal insert moldings can provide parts for a variety of industries including automotive parts, electronics parts, and medical device parts which have improved functional or mechanical properties versus overmolded parts.

These and other advantages and benefits of the present invention will be apparent from the Detailed Description of the Invention herein below.

## BRIEF DESCRIPTION OF THE FIGURES

The present invention will now be described for purposes of illustration and not limitation in conjunction with the figures, wherein:

FIG. 1 shows the test mold used in measuring the metal in mold materials of the invention;

FIG. 2 depicts a cross section through a metal insert molding of the invention;

FIG. 3 illustrates a cross section through a metal insert molding of the invention;

FIG. 4 is a cross section through a metal insert molding of the invention; and

FIG. 5 provides a cross section through a metal insert molding of the invention.

## DETAILED DESCRIPTION OF THE INVENTION

The present invention will now be described for purposes of illustration and not limitation. Except in the operating examples, or where otherwise indicated, all numbers expressing quantities, percentages, and so forth in the specification are to be understood as being modified in all instances by the term "about."

Any numerical range recited in this specification is intended to include all sub-ranges of the same numerical

precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited in this specification is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such sub-ranges would comply with the requirements of 35 U.S.C. §112(a), and 35 U.S.C. §132(a). The various embodiments disclosed and described in this specification can comprise, consist of, or consist essentially of the features and characteristics as variously described herein.

Any patent, publication, or other disclosure material identified herein is incorporated by reference into this specification in its entirety unless otherwise indicated, but only to the extent that the incorporated material does not conflict with existing definitions, statements, or other disclosure material expressly set forth in this specification. As such, and to the extent necessary, the express disclosure as set forth in this specification supersedes any conflicting material incorporated by reference herein. Any material, or portion thereof, that is said to be incorporated by reference into this specification, but which conflicts with existing definitions, statements, or other disclosure material set forth herein, is only incorporated to the extent that no conflict arises between that incorporated material and the existing disclosure material. Applicant reserves the right to amend this specification to expressly recite any subject matter, or portion thereof, incorporated by reference herein.

Reference throughout this specification to "various non-limiting embodiments," "certain embodiments," or the like, means that a particular feature or characteristic may be included in an embodiment. Thus, use of the phrase "in various non-limiting embodiments," "in certain embodiments," or the like, in this specification does not necessarily refer to a common embodiment and may refer to different embodiments. Further, the particular features or characteristics may be combined in any suitable manner in one or more embodiments. Thus, the particular features or characteristics illustrated or described in connection with various or certain embodiments may be combined, in whole or in part, with the features or characteristics of one or more other embodiments without limitation. Such modifications and variations are intended to be included within the scope of the present specification.

The grammatical articles "a", "an", and "the", as used herein, are intended to include "at least one" or "one or more", unless otherwise indicated, even if "at least one" or "one or more" is expressly used in certain instances. Thus, these articles are used in this specification to refer to one or more than one (i.e., to "at least one") of the grammatical objects of the article. By way of example, and without limitation, "a component" means one or more components, and thus, possibly, more than one component is contemplated and may be employed or used in an implementation of the described embodiments. Further, the use of a singular noun includes the plural, and the use of a plural noun includes the singular, unless the context of the usage requires otherwise.

In a first embodiment, the present invention is directed to a metal insert molding comprising: a metal plate encapsulated in a thermoplastic resin composition comprising, (a) an aromatic polycarbonate, (b) a polyether polyol and optionally, (c) at least one additive selected from the group consisting of flame retardants, antidripping agents, impact modifiers, fillers, antistats, coloring agents, pigments, thermal stabilizers different from component (b), lubricants, demolding agents, ultraviolet absorbers, infrared absorbers, hydrolysis stabilizers, and compatibilizers; and wherein the metal insert molding has a horizontal thickness (A) of from 1.0X to 6.3X, a bite/interface depth (B) of 1.5X, and a vertical thickness (C) of from 1.5X to 2.5X. X varies, preferably between 1mm and 4mm.

In a second embodiment, the present invention relates to a process of producing a metal insert molding comprising: encapsulating a metal plate within a thermoplastic resin composition comprising, a) an aromatic polycarbonate, b) a polyether polyol and optionally, c) at least one additive selected from the group consisting of flame retardants, antidripping agents, impact modifiers, fillers, antistats, coloring agents, pigments, thermal stabilizers different from component b, lubricants, demolding agents, ultraviolet absorbers, infrared absorbers, hydrolysis stabilizers, and compatibilizers, at a ratio of pack pressure to injection pressure of greater than 0.75, wherein the metal insert molding has a horizontal thickness (A) of from 1.0X to 6.3X, a bite/interface depth (B) of 1.5X, and a vertical thickness (C) of from 1.5X to 2.5X. X varies, preferably between 1mm and 4mm.

In a third embodiment, the present invention relates to a part comprising the metal insert molding according to the first embodiment or the metal insert molding produced according to the process of the second embodiment.

In various embodiments, the polycarbonates comprise a blend of a polycarbonate with another thermoplastic copolymer, such as acrylonitrile-styrene-butadiene (ABS), acrylonitrile-styrene-acrylate (ASA), styrene-acrylonitrile (SAN), polyethylene terephthalate (PET), polybutylene terephthalate (PBT), and others.

**Component (a)**

According to the invention, "polycarbonate" is to be understood as meaning both homopolycarbonates and copolycarbonates, in particular, polycarbonates. These polycarbonates may be linear or branched in known fashion. According to the invention, mixtures of polycarbonates may also be used.

A "polycarbonate" or a "polycarbonate material" is a thermoplastic material preferably comprising at least 50 wt.% polycarbonate, more preferably at least 60 wt.% polycarbonate, and even more preferably, at least 65 wt.% polycarbonate.

A portion of up to 80 mol%, preferably of 20 mol% to 50 mol%, of the carbonate groups in the polycarbonates used in accordance with the invention may be replaced by aromatic dicarboxylic ester groups. Polycarbonates of this kind, incorporating both acid radicals from the carbonic acid and acid radicals from aromatic dicarboxylic acids in the molecule chain, are referred to as "aromatic polyestercarbonates." In the context of the present invention, they are encompassed by the umbrella term of the thermoplastic aromatic polycarbonates. The replacement of the carbonate groups by aromatic dicarboxylic acid ester groups takes place essentially stoichiometrically and quantitatively, so that the molar ratio of the reaction partners can also be found in the finished polyestercarbonate. The incorporation of dicarboxylic acid ester groups can be statistical as well as in blocks.

In various embodiments, the thermoplastic polycarbonates, including the thermoplastic aromatic polyestercarbonates, have weight average molecular weights $M_w$, determined by gel permeation chromatography under use of $CH_2Cl_2$ as diluent, of from 10,000 g/mol to 35,000 g/mol, in certain embodiments, from 12,000 g/mol to 32,000 g/mol, in selected embodiments, from 15,000 g/ mol to 32,000 g/mol, and in particular embodiments, from 20,000 g/mol to 31,500 g/mol. The gel permeation chromatography is conducted under the following conditions: calibration with linear polycarbonate (made from bisphenol A and phosgene) of known molecular weight distribution, standards from PSS Polymer Standards Service GmbH, Germany, calibration according to method 2301-0257502-09D (from the year 2009 in German language) from Currenta GmbH & Co. OHG, Leverkusen. Diluent methylene chloride. Column combination from cross-linked styrenedivinylbenzene resin. Diameter of the analytical columns: 7.5 mm, length: 300 mm. Particle size of the column material: 3 $\mu$m to 20 $\mu$m. Concentration of the solutions: 0.2 wt.%. Flow rate: 1.0 ml/min, temperature of the solution: 30°C. Detection by means of a refractive index (RI)-detector.

Details regarding the preparation of polycarbonates are disclosed in many patent documents spanning approximately the last 60 years. Reference may be made here to Schnell, "Chemistry and Physics of Polycarbonates", Polymer Reviews, Volume 9, Interscience Publishers, New York, London, Sydney 1964, to D. Freitag, U. Grigo, P.R. Müller, H. Nouvertné, BAYER AG, "Polycarbonates" in Encyclopedia of Polymer Science and Engineering, Volume 11, Second Edition, 1988, pages 648-718 and finally to U. Grigo, K. Kirchner and P.R. Müller "Polycarbonate" [Polycarbonates] in Becker/Braun, Kunststoff-Handbuch [Plastics Handbook], volume 3/1, Polycarbonate, Polyacetale, Polyester, Celluloseester [Polycarbonates, Polyacetals, Polyesters, Cellulose Esters], Carl Hanser Verlag Munich, Vienna 1992, pages 117-299.

Various processes for the production of the polycarbonates which are useful in the present invention, including polyestercarbonates, are the interfacial process and the melt transesterification process (e.g., U.S. Pat. Nos. 5,097,002; 5,340,905; 5,717,057; 6,596,840; 6,740,730; and 7,071,284).

Aromatic polycarbonates are prepared, for example, by reaction of dihydroxyaryl compounds with carbonyl halides, preferably phosgene, and/or with aromatic dicarbonyl dihalides, preferably benzenedicarbonyl dihalides, by the interfacial process, optionally with use of chain terminators and optionally with use of trifunctional or more than trifunctional branching agents, wherein for the production of polyestercarbonates a part of the carbonic acid derivatives is replaced with aromatic dicarboxylic acids or derivatives of dicarboxylic acids, namely according to the carbonate structure units in the aromatic polycarbonates by dicarboxylic acid ester structure units. Preparation via a melt polymerization process by reaction of dihydroxyaryl compounds with, for example, diphenyl carbonate is likewise possible.

Dihydroxyaryl compounds suitable for the preparation of polycarbonates are those of the formula (1)

$$HO\text{-}Z\text{-}OH \qquad (1),$$

wherein,

Z is an aromatic radical of 6 to 30 carbon atoms which may contain one or more aromatic rings, may be substituted and may contain aliphatic, cycloaliphatic radicals, alkylaryl groups, or heteroatoms as bridging elements.

Preferably, Z in formula (1) is a radical of the formula (2),

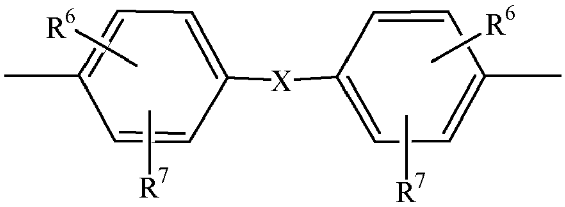

(2),

wherein

$R^6$ and $R^7$ are each independently H, $C_1$-$C_{18}$-alkyl-, $C_1$-$C_{18}$-alkoxy, halogen such as Cl or Br or in each case optionally substituted aryl or aralkyl, in some embodiments H or $C_1$-$C_{12}$-alkyl, in certain embodiments H or $C_1$-$C_8$-alkyl and in selected embodiments H or methyl, and

X is a single bond, $-SO_2-$, -CO-, -O-, -S-, $C_1$-$C_6$-alkylene, $C_2$-$C_5$-alkylidene or $C_5$-$C_6$-cycloalkylidene which may be substituted by $C_1$-$C_6$-alkyl, preferably methyl or ethyl, or else $C_6$-$C_{12}$-arylene which may optionally be fused to further aromatic rings containing heteroatoms.

In various embodiments, X is a single bond, $C_1$-$C_5$-alkylene, $C_2$-$C_5$-alkylidene, $C_5$-$C_6$-cycloalkylidene, -O-, -SO-, -CO-, -S-, $-SO_2-$ or a radical of the formula (2a),

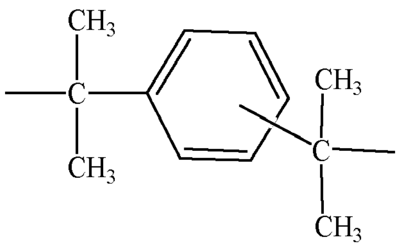

(2a).

Examples of dihydroxyaryl compounds suitable for the preparation of the polycarbonates for use in accordance with the invention include, but are not limited to, hydroquinone, resorcinol, dihydroxydiphenyl, bis(hydroxyphenyl)alkanes, bis(hydroxyphenyl)cycloalkanes, bis(hydroxyphenyl) sulfides, bis(hydroxyphenyl) ethers, bis(hydroxyphenyl) ketones, bis(hydroxyphenyl) sulphones, bis(hydroxyphenyl) sulfoxides, $\alpha,\alpha'$-bis(hydroxyphenyl)diisopropylbenzenes and the alkylated, ring-alkylated and ring-halogenated compounds thereof.

Preferred dihydroxyaryl compounds are 4,4'-dihydroxydiphenyl, 2,2-bis(4-hydroxyphenyl)propane (bisphenol A), 2,4-bis(4-hydroxyphenyl)-2-methylbutane, dimethyl-bisphenol A, 1,1-bis(4-hydroxyphenyl)-p-diisopropylbenzene, 2,2-bis(3-methyl-4-hydroxyphenyl)propane, 2,2-bis(3-methyl-4-hydroxyphenyl)propane, bis(3,5-dimethyl-4-hydroxyphenyl)methane, 2,2-bis(3,5-dimethyl-4-hydroxyphenyl)propane, bis(3,5-dimethyl-4-hydroxyphenyl)sulfone, 2,4-bis(3,5-dimethyl-4-hydroxyphenyl)-2-methylbutane, 1,1-bis(3,5-dimethyl-4-hydroxyphenyl)-p-diisopropylbenzene and 1,1-bis(4-hydroxyphenyl)-3,3,5-trimethylcyclohexane, and bisphenols (1) to (III)

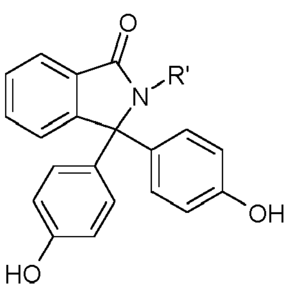

(I)

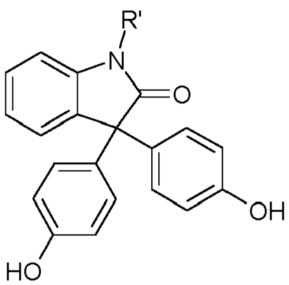

(II)

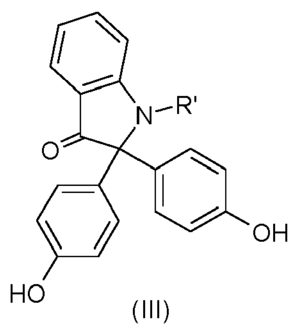

(III)

R' in each case is $C_1$-$C_4$-alkyl, aralkyl or aryl, in certain embodiments, methyl or phenyl, in selected embodiments, methyl.

In certain embodiments, the dihydroxyaryl compounds include 2,2-bis-(4-hydroxyphenyl)-propane (bisphenol A), 2,2-bis(3,5-dimethyl-4-hydroxyphenyl)propane, 1,1-bis(4-hydroxyphenyl)cyclohexane and 1,1-bis(4-hydroxyphenyl)-3,3,5-trimethylcyclohexane (bisphenol TMC) and dimethyl-bisphenol A as well as the dihydroxyaryl compounds of formulas (1), (II) and (III).

These and further suitable dihydroxyaryl compounds are described, for example, in U.S. Pat. Nos. 2,991,273; 2,999,835; 2,999,846; 3,148,172; 3,271,367; 4,982,014; DE 2 036 052 A, and DE 3 832 396 A; in French patent application 1 561 518 A1; GB1122003; GB1229482; GB1341318; GB1367790; in the monograph, H. Schnell, Chemistry and Physics of Polycarbonates, Interscience Publishers, New York 1964, p. 28 ff.; p.102 ff., and in D.G. Legrand, J.T. Bendler, Handbook of Polycarbonate Science and Technology, Marcel Dekker New York 2000, p. 72ff.

Only one dihydroxyaryl compound is used in the case of the homopolycarbonates; two or more dihydroxyaryl compounds are used in the case of copolycarbonates. The dihydroxyaryl compounds employed, as well as components of the compositions used in accordance with the invention, similarly to all other chemicals and assistants added to the synthesis, may be contaminated with the contaminants from their own synthesis, handling, and storage. However, it is desirable to employ the purest possible raw materials.

Examples of suitable carbonic acid derivatives include phosgene and diphenyl carbonate.

Suitable chain terminators useful in the production of polycarbonates are monophenols. Suitable monophenols include, for example, phenol itself, alkylphenols such as cresols, p-tert-butylphenol, cumylphenol, and mixtures thereof.

In various embodiments, chain terminators include phenols mono- or polysubstituted by linear or branched $C_1$-$C_{30}$-alkyl radicals, unsubstituted or substituted by tert-butyl. In selected embodiments, the chain terminators are phenol, cumylphenol and p-tert-butylphenol. The amount of chain terminator to be used may be 0.1 to 5 mol%, based on moles of dihydroxyaryl compounds used in each case. The chain terminators can be added before, during or after the reaction with a carbonic acid derivative.

Suitable branching agents include trifunctional or more than trifunctional compounds familiar in polycarbonate chemistry, particularly those having three or more than three phenolic OH groups. Examples of suitable branching agents include, but are not limited to, 1,3,5-tri(4-hydroxyphenyl)benzene, 1,1,1-tri(4-hydroxyphenyl)ethane, tri(4-hydroxyphenyl) phenylmethane, 2,4-bis(4-hydroxyphenylisopropyl)phenol, 2,6-bis(2-hydroxy-5'-methylbenzyl)-4-methylphenol, 2-(4-hydroxyphenyl)-2-(2,4-dihydroxyphenyl)propane, tetra(4-hydroxyphenyl)methane, tetra(4-(4-hydroxyphenylisopropyl) phenoxy)methane and 1,4-bis((4',4"-dihydroxytriphenyl)methyl)benzene and 3,3-bis(3-methyl-4-hydroxyphenyl)-2-oxo-2,3-dihydroindole. The amount of any branching agents to be used may be 0.05 mol% to 2 mol%, based on moles of dihydroxy aryl compounds used in each case. The branching agents can either be initially charged together with the dihydroxyaryl compounds and the chain terminators in the aqueous alkaline phase or added dissolved in an organic solvent before the phosgenation. In the case of the transesterification process, the branching agents are used together with the dihydroxyaryl compounds.

To facilitate incorporation of additives, component A may be used in the form of powders, pellets, or mixtures thereof.

In various embodiments, the polycarbonate has an MVR of from 4.5 to 34 $cm^3$/(10 min), in certain embodiments of from 5.5 to 12 $cm^3$/(10 min), in selected embodiments of from 6 to 10 $cm^3$/(10 min), determined according to ISO 1133:2012-03 at a test temperature of 300 °C and 1.2 kg load.

A mixture of different polycarbonates may be used as Component (a), for example a mixture of the polycarbonates a1 and a2, wherein a2 is a polycarbonate in powdered form. As used herein, the properties for the polycarbonate refer to a respective mixture.

In various embodiments, the compositions contain 50 wt.% to 98.5 wt.%, in some embodiments, 69.85 wt.% to 98.0 wt.%, in certain embodiments 85 wt.% to 97.5 wt.%, in selected embodiments 90.0 wt.% to 97.5 wt.%, and in particular embodiments, 93.0 wt.% to 97.5 wt.% of the aromatic polycarbonate.

## Component (b)

Component (b) of the polycarbonate comprises one or more stabilizers in the form of a polyether polyol. As those skilled in the art are aware, polyether polyols are the product of the polymerization of epoxides, such as ethylene oxide (EO), propylene oxide (PO), butylene oxide, styrene oxide, and epichlorohydrin, with themselves or by addition of such epoxides, optionally in admixture or sequentially, to starting components with reactive hydrogen atoms, such as water, alcohol, ammonia or amines. Such "starter molecules" usually have a functionality of from 1 to 6. Depending on the process control, such polyether polyols may be homopolymers, block copolymers, random copolymers, capped polymers, or polymers tipped with a mixture of different epoxides.

To specify such polyether polyols, various characteristics have become established in the art:

i) hydroxyl functionality, which depends on the starter molecule starting from which the polyether polyol is synthesized,
ii) hydroxyl or OH number, which is a measure of the content of hydroxyl groups stated in mg of KOH/g, determined according to DIN 53240-3:2016-03,
iii) where epoxides in which the ring opening causes the formation of different, i.e., primary or secondary) hydroxyl groups are used, on the one hand, the proportion of the respective epoxides in the polyether polyol is stated, and on the other hand, the proportion of primary or secondary hydroxyl groups based on the total number of hydroxyl groups

present in the polyether polyol is stated, and

iv) the molecular weight ($M_n$ or $M_w$), which is a measure of the length of the polyoxyalkylene chains of the polyether polyols.

In various embodiments, polyether polyols have a number average molecular weight $M_n$ of from 100 to 6200 g/mol, in certain embodiments from 1500 to 4000 g/mol, and in selected embodiments from 1800 to 3000 g/mol, where. $M_n$ is calculated according to the following formula:

$$M_n = 56100*F/OHN,$$

where OH-number (OHN) is determined via hydroxyl end group titration according to DIN 53240-3:2016-03. OHN in mg KOH/g is inserted in the given formula. F is the functionality, which in the context of this invention is related to hydroxyl end groups. Acid end groups, if any, are not taken into account. F is defined as number of hydroxyl end groups, divided by the number of molecules in an ensemble, meaning F is the average number of hydroxyl end groups of a molecule of a compound. F is normally apparent from the recipe for preparing the polyol but may alternatively be determined by $^1$H NMR.

In various embodiments, the polyether polyols may be formed from repeating ethylene oxide and propylene oxide units, e.g., with a share of 35 wt.% to 100 wt.% propylene oxide units, in certain embodiments 50 wt.% to 100 wt.% propylene oxide units. The copolymers may be statistical copolymers, gradient copolymers, alternating copolymers or block copolymers formed from ethylene oxide and propylene oxide. In selected embodiments, the polyether polyols are linear polymers.

Useful polyether polyols are those formed from repeating propylene oxide units with a 1,2-diol as starter molecule, more preferably with propylene glycol as the starter molecule. The polyether polyols may be end-capped. In selected embodiments, the polyether polyol is end capped. A preferred agent for end-capping is dihydropyran (3,4-dihydro-2H-pyran).

In certain embodiments, the polyether polyols may be those formed from repeating propylene oxide units with propylene glycol as starter molecule, an OH number within a range of from 50 to 70 mg KOH/g determined according to DIN 53240-3:2016-03, and having a hydroxyl functionality of 2, a proportion of primary hydroxyl groups within a range of from 0 to 3%, based on the total number of primary and secondary hydroxyl groups, having a propylene oxide content of at least 95 wt.% and ethylene oxide content of up to 3 wt.%, in selected embodiments, those without any ethylene oxide units, but only with propylene oxide units.

The polycarbonates useful in the invention may comprise polyether polyols in various embodiments in an amount of from 0.1 to 5 wt.%, in certain embodiments, 0.1 wt.% to 2 wt.%, in selected embodiments, 0.5 wt.% to 1 wt.%, and in particular embodiments, 0.5 wt.% to 1.0 wt.%, wherein wt.% refers to the weight of the polycarbonate.

## Component (c)

The polycarbonates and polycarbonate blend compositions useful in the invention optionally may comprise additives known to those in the art, including, but not limited to, flame retardants, antidripping agents, impact modifiers, fillers, antistats, coloring agents, pigments, thermal stabilizers different from component (b), lubricants, demolding agents, UV absorbers, IR absorbers, hydrolysis stabilizers, and compatibilizers. Such additives as typically added in the case of polycarbonates are described, e.g., in U.S. Pat. Nos. 5,288,778; 5,821,380; and 5,883,165 and in "Plastics Additives Handbook", Hans Zweifel, 5th Edition 2000, Hanser Verlag, Munich.

The amount of such additives in various embodiments is up to 30 wt.%, in some embodiments up to 10 wt.%, in certain embodiments up to 6 wt.%, in selected embodiments 0.01 to 3 wt.%, and in particular embodiments 1 wt.%, with all values referring to the composition and all including the upper value.

Useful demolding agents include, but are not limited to, pentaerythrityl tetrastearate (PETS), glycerine monostearate (GMS), their carbonates, and mixtures of any of these.

Optionally, the composition may include a UV absorber. Various UV absorbers are those having as low a transmission as possible below 400 nm and as high a transmission as possible above 400 nm. Such UV absorbers are known in the art and described, e.g., in U.S. Pat. Nos. 5,288,778; 5,821,380; and 5,883,165. Ultraviolet absorbers particularly suitable for use in the composition according to the invention are selected from benzotriazoles, triazines, benzophenones, and arylated cyanoacrylates.

Particularly suitable ultraviolet absorbers are hydroxybenzotriazoles, such as 2-(3',5'-bis(1,1-dimethylbenzyl)-2'-hydroxyphenyl)benzotriazole (TINUVIN 234, BASF), 2-(2'-hydroxy-5'-(tert-octyl)phenyl)benzotriazole (TINUVIN 329, BASF), bis(3-(2H-benzotriazolyl)-2-hydroxy-5-tert-octyl)methane (TINUVIN 360, BASF), 2-(4,6-diphenyl-1,3,5-triazin-2-yl)-5-(hexyloxy)phenol (TINUVIN 1577, BASF), and also benzophenones such as 2,4-dihydroxybenzophenone (CHIMASSORB 22, BASF) and 2-hydroxy-4-(octyloxy)benzophenone (CHIMASSORB 81, BASF), 2,2-bis[[(2-cyano-1-oxo-3,3-diphenyl-2-propenyl)oxy]methyl]-1,3-propanediyl ester (9CI) (UVINUL 3030, BASF AG), 2-[2-hydroxy-4-(2-ethylhexyl)oxy]phenyl-4,6-di(4-phenyl)phenyl-1,3,5-triazine (TINUVIN 1600, BASF,), tetraethyl-2,2'-(1,4-phenylenedimethylidene) bismalonate (HOSTAVIN B-Cap, Clariant) or N-(2-ethoxyphenyl)-N'-(2-ethylphenyl)ethanediamide (TINUVIN 312, CAS No. 23949-66-8, BASF). Particularly preferred specific UV absorbers are TINUVIN 360, TINUVIN 329 and/or TINUVIN 312, very particular preference being given to TINUVIN 329 and TINUVIN 312. It is also possible to employ mixtures of these ultraviolet absorbers.

Suitable IR absorbers are described, in a variety of patents including U.S. Pat. Nos. 7,074,351; 7,169,834; 8,153,239; and in U.S. Pat. Pub. 2005/0165148. Of those mentioned in the literature, boride- and/or tungstate-based IR absorbers, in particular, cesium tungstate or zinc-doped cesium tungstate, as well as ITO- or ATO-based IR absorbers and combinations thereof are particularly useful.

Suitable impact modifiers are core-shell type impact modifiers, including, but not limited to, acrylonitrile butadiene styrene (ABS), copolymer of methyl methacrylate, acrylonitrile, butadiene and styrene (MBS), acryl-based, silicone-acryl-based impact modifiers, and non-core-shell type impact modifiers.

The polycarbonates and polycarbonate blends useful according to the invention may comprise organic and inorganic fillers in the usual amounts. Suitable fillers include, but are not limited to, glass fibers and carbon fibers, cellulosics, graphite, graphene, and carbon nanotubes, chalk, quartz powder, titanium dioxide, silicates, aluminosilicates, e.g., talc, wollastonite, montmorillonite, also modified by ion exchange, kaolin, zeolite, vermiculite, aluminum oxide, and silica. Mixtures of these or these and other fillers may also be used.

Polytetrafluoroethylene (PTFE) is a preferred antidripping agent, although other antidripping agents may be used.

Sulfur-containing stabilizers may be used including, but not limited to, 3,3'-thiodipropionic, distearyl disulfide (HOSTANOX SE 10, Clariant), pentaerythrityl tetrakis(3-laurylthiopropionate) (SOGNOX 4120, Songwon International AG) and bis-(phenylsulfonyl)methane.

The polymer compositions useful in the invention, comprising Components (a), (b), and optionally (c), are produced by standard incorporation processes via combination, mixing and homogenization of the individual constituents, especially with the homogenization taking place in the melt under the action of shear forces. If appropriate, combination and mixing prior to the melt homogenization occurs using powder premixes. For all components used, it is desirable to employ the purest possible compounds.

Various embodiments may use premixes of granules or granules and powders with components (b) and optionally (c). Other embodiments may use premixes which have been produced from solutions of the mixture components in suitable solvents, in which case homogenization is optionally effected in solution and the solvent is removed. It is also possible to introduce components (b) and optionally (c) into the polycarbonate by known methods or as a masterbatch. Masterbatches may be used in selected embodiments for incorporation of component (c).

In this context, the composition useful in the invention may be combined, mixed, homogenized and subsequently extruded in customary apparatus such as screw extruders (TSE twin-screw extruders for example), kneaders or BRABENDER or BANBURY mills. In these embodiments, the extrudate may be cooled and comminuted after extrusion. It is also possible to premix individual components and to add the remaining starting materials individually and/or likewise in a mixture.

It is possible in various embodiments to combine and mix a premix in the melt in the plastifying unit of an injection-molding machine. In these embodiments, the melt is converted directly to a shaped body in the subsequent step.

The manufacture of the molded parts from the compositions according to the invention in various embodiments may be accomplished by injection-molding, extrusion, or rapid-heat cycle molding.

In various embodiments, the polycarbonate comprises a blend of a polycarbonate with a thermoplastic copolymer chosen from among acrylonitrile-styrene-butadiene (ABS), acrylonitrile-styrene-acrylate (ASA), styrene-acrylonitrile (SAN), polyethylene terephthalate (PET), polybutylene terephthalate (PBT), and others.

## Polycarbonate/acrylonitrile-butadiene-styrene (ABS) copolymer blends

A rubber-modified vinyl (co) polymer is included in polycarbonate/ABS blends,

B.l) 80 wt.%to 95 wt.%, preferably 83 wt.%to 93 wt.%, more preferably 85 wt.%to 92 wt.%, based on the rubber-modified vinyl (co) polymer B, structural units derived from at least one vinyl monomer and

B.2) 5 wt.% to 20 wt.%, preferably 7 wt.% to 17 wt.%, more preferably 8 wt.% to 15 wt.%, based on the rubber-modified vinyl (co) polymer B, one or more rubber-elastic graft bases having glass transition temperatures Tg< -50°C, preferably from < -60°C, particularly preferably < -70°C containing at least 50 wt .%, preferably at least 70 wt.%, particularly preferably 100 wt.%, based on B.2, derived from 1,3-butadiene structural units,

wherein the rubber-modified vinyl (co) polymer B is

(i) a disperse phase consisting of

(i. 1) with vinyl (co) polymer of structural units according to B.1 grafted rubber particles and
(i.2) vinyl (co)polymer enclosed in the rubber particles as a separated disperse phase also from structural units according to B.1
and

(ii) a rubber-free vinyl (co)polymer matrix not bound to the rubber particles and not enclosed in these rubber particles consisting of structural units according to B.1,

and wherein the disperse phase according to (1) has an average diameter D50 measured by ultracentrifugation of 0.7 to 2.0 pm, preferably from 0.7 to 1.5 pm, in particular from 0.7 to 1.2 pm.

The glass transition temperature Tg is determined, unless expressly described otherwise in the present invention, for all components by means of differential scanning calorimetry (DSC) according to DIN EN 61006 (version of 1994) at a heating rate of 10 K / min with determination of the Tg as the center temperature (tangent method).

The rubber-modified vinyl (co) polymers according to component B have a melt flow rate (MVR), measured according to ISO 1133 (version of 2012) at 220 ° C with a stamp load of 10 kg, of preferably 2 to 20 ml/10min, more preferably 3 to 15 ml/10min, in particular 4 to 8 ml/10min. If mixtures of several rubber-modified vinyl (co)polymers are used as component B, the preferred MVR ranges are the mean value of the MVR of the individual components weighted over the mass fractions of the components in the mixture.

Such rubber-modified vinyl (co) polymers B are prepared, for example, by radical polymerization, preferably in the mass polymerization process, of

B.1 80 to 95 wt.%, preferably 83 to 93 wt.%, particularly preferably 85 to 92 wt.%, based on the rubber-modified vinyl (co) polymer B, at least one vinyl monomer in the presence of
B.2 5 to 20 wt.%, preferably 7 to 17 wt.%, particularly preferably 8 to 15 wt.%, based on the rubber-modified vinyl (co) polymer B, one or more rubber-elastic graft bases with glass transition temperatures < -50 ° C, preferably < -60 ° C, particularly preferably < -70 ° C, containing at least 50 wt .-%, preferably at least 70 wt.%, particularly preferably 100 wt.% based on B.2, of structural units derived from 1,3-butadiene.

In the mass polymerization process used for the preparation of the rubber-modified vinyl (co) polymer B, both the polymerization of the vinyl monomers according to B. 1 and a grafting of the resulting vinyl (co) polymer onto the rubber-elastic graft base according to B.2. Furthermore, in this reaction formation by self-organization (phase separation) the formation of a disperse phase (i) consisting of

(1.1) rubber particles grafted with vinyl(co)polymer from structural units according to B. 1 and
(1.2) vinyl (co)polymer enclosed in the rubber particles as a separate disperse phase also from structural units according to B.1,

wherein this rubber-containing phase (i) is dispersed in a rubber-free vinyl (co) polymer matrix (ii) consisting of structural units according to B. 1 not bound to the rubber particles and not enclosed in these rubber particles.

The rubber-free vinyl (co) polymer (ii) can be dissolved in contrast to the other vinyl (co) polymer proportions in component B by suitable solvents such as acetone.

The size of the disperse phase (i) in the rubber-modified vinyl (co) polymers B thus prepared is adjusted via the conditions of reaction formation such as temperature and resulting viscosity of the polymer and shear by, for example, stirring.

The average particle size $D_{50}$ is the diameter above and below which 50 wt.% of the particles lie. It is, unless expressly described otherwise in the present invention, for all components by means of ultracentrifuge measurement (W. Scholtan, H. Lange, Colloid and Polymer Science, 250 (1972), 782-796).

The monomers B.1 are preferably mixtures consisting of

B.1.1 60 to 85 wt. preferably, 65 to 80 wt., more preferably, 70 to 78 wt., parts, each based on the sum ofB.1.1 and B.1.2, styrene and
B.1.2 15 to 40 wt. - preferably 20 to 35 wt., more preferably 22 to 30 wt. -Parts, each based on the sum ofB.1.1 and B.1.2, acrylonitrile, and optionally
B.1.3 0-10 wt., preferably 0-7 wt., more preferably 0-5 wt. -Parts methyl methacrylate or n-butyl acrylate, each based on 100 wt. -Parts as the sum ofB.1.1 and B.1.2.

Preferred graft bases B.2 are diene rubbers containing butadiene, or mixtures of diene rubbers containing butadiene or copolymers of diene rubbers containing butadiene or mixtures thereof with other copolymerizable monomers (e.g., according to B.1.1 and B.1.2). Particularly preferred graft bases B.2 are produced by anionic polymeriziation using a lithium compound as polymerization catalyst. Particularly preferred as graft base B.2 is pure polybutadiene rubber. In a further preferred embodiment, B.2 is styrene-butadiene-block copolymer rubber.

The component B preferably has a polybutadiene content of 5 to 18 wt.%, more preferably from 7 to 15 wt.%, in particular from 8 to 13 wt.%.

Particularly preferred rubber-modified vinyl (co) polymers according to component B are mass ABS polymers such as those described for example in U.S. Pat. No. 3,644,574 (=DE-OS 2,035,390) or in DE-OS 2,248,242 (= GB-PS 1,409,275) or in Ullmann's Encyclopedia of Chemical Technology, Vol. 19 (1980), p. 280 ff. are described.

The not chemically bound to the rubber base (s) B.2 and not enclosed in the rubber particles vinyl (co) polymer (ii) can be formed as shown above due to the production during the polymerization of graft polymers B. It is also possible that a part of this not chemically bound to the rubber base (s) B.2 and not included in the rubber particles vinyl (co) polymer (ii) in the rubber-modified vinyl (co) polymer according to component B is formed due to production during its production in the mass polymerization process and another part is polymerized separately and added to component B as part of component B. The proportion of vinyl (co) polymer (ii), regardless of its origin, measured as an acetone-soluble portion, is in component B, based on component B, preferably at least 50 wt.%, particularly preferably at least 60 wt.%, more preferably at least 70 wt.%.

This vinyl (co) polymer (ii) has in the rubber-modified vinyl (co) polymers according to component B a weight-averaged molecular weight $M_w$ from 70 to 250 kg / mol, preferably from 130 to 200 kg / mol, in particular from 150 to 180 kg / mol.

The weight-averaged molecular weight $M_w$ of vinyl (co) polymer (ii) in component B is measured in the present invention by gel permeation chromatography (GPC) in tetrahydrofuran against a polystyrene standard.

Component B is preferably free of emulsifiers that are typically used in emulsion polymerization processes such as for example saturated fatty acids having 8 to 22 carbon atoms, resin acids, alkyl and alkylarylsulfonic acids, and fatty alcohol sulfates.

The component B preferably contains less than 100 ppm, more preferably less than 50 ppm, most preferably less than 20 ppm ions of alkali metals and alkaline earth metals. The component B preferably contains an amount greater than zero but less than 10 ppm, more preferably 0.01-5 ppm, most preferably 0.1-2 ppm of lithium.

Suitable as component B rubber-modified vinyl (co) polymers are, for example, MAGNUM 3404, MAGNUM 3504 and MAGNUM 3904 from Trinseo S.A. (Luxembourg).

## Polycarbonate/styrene-acrylonitrile copolymer (SAN) blends

In polycarbonate/ASA polymer blends, an acrylonitrile-styrene-acrylate copolymer (ASA), is included which comprises a styrene-acrylonitrile (SAN) matrix having an acrylate elastomer phase dispersed within the SAN. The ASA terpolymer can be a homogeneous blend of polymers and/or an interpolymer, i.e., a polymer composition having a plurality of phases, wherein the polymer phases have graft linkages and/or interpenetration of polymer chains of a first phase into a second phase. The interpenetrating chains can form a network within the phase into which they penetrate. Acrylonitrile-styrene-acrylate copolymers also desirably have an outer continuous phase of acrylonitrile-styrene copolymer, which is suitable for good blending properties with polycarbonate.

Acrylonitrile-styrene-acrylate copolymers can comprise a phase comprising a crosslinked acrylate elastomer, a phase comprising a crosslinked styrene-acrylonitrile copolymer, and a phase comprising a linear styrene acrylonitrile copolymer. As used in the context of the present invention, "styrene" can include methyl substituted styrene such as, $\alpha$-methylstyrene, vinyl toluene, and combinations thereof.

Specific acrylonitrile-styrene-acrylate copolymers include core-shell-type impact modifiers in a styrene-acrylonitrile (SAN) matrix. The acrylate elastomer core portion of these resins may be composed of alkyl, aryl, or aryl-alkyl (also referred to as aralkyl) esters of acrylic or methacrylic acids. Specifically, acrylates include esterified products of $C_1$ - $C_{30}$-substituted alkyl, $C_3$-$C_{30}$ - substituted cycloalkyl, $C_6$-$C_{30}$-substituted aryl, and $C_7$-$C_{30}$-substituted aralkyl alcohols.

Suitable acrylate monomers include, but are not limited to, methyl acrylate, ethyl acrylate, 1-propyl acrylate, 2-propyl acrylate, n-butyl acrylate, 2-butyl acrylate, 2-methylpropyl acrylate, t-butyl acrylate, n-pentyl acrylate, 2-pentyl acrylate, 3-pentyl acrylate, 2,2-dimethylpropyl acrylate, n-hexyl acrylate, cyclohexyl methacrylate, methyl cyclohexyl acrylate, heptyl acrylates, octyl acrylates, decyl acrylates, phenyl acrylate, benzyl acrylate, hydroxyethyl acrylate, 2-hydroxypropyl acrylate, and combinations thereof.

Methacrylate monomers may also be used, including but not limited to, methyl methacrylate, ethyl methacrylate, 1-propyl methacrylate, 2-propyl methacrylate, n-butyl methacrylate, 2-butyl methacrylate, 2-methylpropyl methacrylate, t-butyl methacrylate, n-pentyl methacrylate, 2-pentyl methacrylate, 3-pentyl methacrylate, 2,2-dimethylpropyl methacrylate, n-hexyl methacrylate, cyclohexyl methacrylate, methyl cyclohexyl methacrylate, heptyl methacrylates, octyl methacrylates, decyl methacrylates, phenyl methacrylate, benzyl methacrylate, hydroxyethyl methacrylate, 2-hydroxypropyl methacrylate.

Specific nitrile monomers include acrylonitrile, methacrylonitrile, fumaronitrile, a combination comprising one or more of these. Suitable vinyl aromatic monomers include, but are not limited to, styrene, $\alpha$-methyl styrene, vinyl toluene, chloromethyl styrene, chlorostyrene, bromostyrene, acetoxystyrene, methoxystyrene, and combinations thereof.

Such acrylonitrile-styrene-acrylate polymers can be prepared by solution phase polymerization, emulsion polymerization suspension polymerization, a combination comprising at least one of these methods. The core shell portion of the resin may be prepared by a process wherein the acrylate elastomer core is polymerized, and a thermoplastic shell is grafted to the core. Specific examples of a thermoplastic shell include polymethyl methacrylate, polystyrene, styrene-acrylonitrile copolymer, and other similar vinyl polymers or copolymers. The acrylate or methacrylate elastomer core may be crosslinked with polyfunctional vinyl compounds including, but not limited to, divinyl benzene, 1,5-hexadiene, 1,7-octadiene, diethyleneglycol diacrylate, propylene glycol diacrylate, propylene glycol dimethacrylate.

Acrylonitrile-styrene-acrylate (ASA) copolymers suitable for use as component B are known in the literature and are available from a variety of suppliers, such as Formosa Chemicals (GELOV), Chi Mei Corporation (KIBILAC), and Sabic (LURAN).

The compositions of the present invention may contain 20 wt.% to 40 wt.%, preferably 25 wt.% to 35 wt.% of acrylonitrile-styrene-acrylate (ASA) copolymer, based on the weight of the composition. The acrylonitrile-styrene-acrylate (ASA) copolymer may be present in the composition of the present invention in an amount ranging between any combination of these values, inclusive of the recited values.

In the present invention, styrene-acrylonitrile copolymer is referred to as SAN resin. The proportion of acrylonitrile is 5% to 50% by weight, preferably 15% to 35% by weight, the proportion of styrene is 95% to 50% by weight, preferably 85% to 65% by weight, based on 100% by weight of the overall styrene-acrylonitrile copolymer.

The styrene-acrylonitrile copolymer can be prepared by any processes such as bulk polymerization, solution polymerization, suspension polymerization and emulsion polymerization, preferably bulk polymerization or suspension polymerization. Further, copolymerization process can be one-step copolymerization or multi-step copolymerization. The styrene-acrylonitrile copolymer useful in the present invention has a weight average molecular weight of 40,000-200,000 g/mol, preferably 50,000-160,000 g/mol, more preferably 70,000-150,000 g/mol, measured by gel permeation chromatography (GPC).

Styrene-acrylonitrile (SAN) copolymers suitable for use in the polycarbonate blends are known in the literature or can be prepared by methods in the literature and are commercially available from a variety of suppliers, such as INEOS (LUSTRAN).

The polycarbonate blends of the present invention may contain 0 wt.% to 35 wt.%, preferably >0 wt.% to 32 wt.% of styrene-acrylonitrile copolymer, based on the weight of the composition. The styrene-acrylonitrile copolymer may be present in the polycarbonate blends of the present invention in an amount ranging between any combination of these values, inclusive of the recited values.

## Polycarbonate/polyethylene terephthalate (PET) copolymer blends

In polycarbonate/PET polymer blends, polyethylene terephthalate (also referred to as "PET") is included which is a polyester of terephthalic acid and ethylene glycol which can be obtained by the polycondensation of dimethyl terephthalate with ethylene glycol, and also terephthalic acid with ethylene glycol or ethylene oxide. Polyethylene terephthalate exists both as an amorphous (transparent) and as a semi-crystalline (opaque and white) thermoplastic material. It has chemical resistance to mineral oils, solvents, and acids but not to bases. Semi-crystalline polyethylene terephthalate has good strength, ductility, stiffness, and hardness. Amorphous polyethylene terephthalate has better ductility but less stiffness and hardness.

The polycarbonate blends of the present invention may contain 0 wt.% to 35 wt.%, preferably >0 wt.% to 32 wt.% of polyethylene terephthalate copolymer, based on the weight of the composition. The polyethylene terephthalate copolymer may be present in the polycarbonate blends of the present invention in an amount ranging between any combination of these values, inclusive of the recited values.

## Polycarbonate/polybutylene terephthalate (PBT) copolymer blends

In polycarbonate/polybutylene terephthalate copolymer blends, PBT is included which can be produced by the process taught in U.S. Pat. No. 2,465,319 to Winfield et al. It is prepared by heating together terephthalic acid and an excess of tetramethylene glycol at a temperature between 220° and 240° C and thereafter heating the reaction mixture in the absence of air and presence of nitrogen or other inert gas for some hours until a desired intrinsic viscosity is reached. The resin can then be heated under vacuum to remove by-products. For the purposes of the present invention the polybutylene terephthalic polyester should have an internal viscosity of at least about 0.95 and preferably between 1.20

and 1.30. As is well known, intrinsic viscosity is determined as an indication of the more difficultly measurable molecular weight of condensation polymers and is defined as: Limit $\frac{\eta sp}{C}$ as C approaches zero where nsp is the viscosity of a dilute orthochlorophenol solution of the polyester divided by the viscosity of the orthochlorophenol solvent per se measured in the same units at the same temperature, and C is the concentration in grams of the polyester per 100 cc of solution, as is set forth in, col. 3 of U.S. Pat. No. 2,597,643.

The resins of the present invention may be prepared by mechanically mixing the polybutylene terephthalate with about 10 to 20 wt.% of the polycarbonate based on the total weight of the resin and then extruding the mixture. Other additives may also be included in the mixture or master batched into one of the components. If additives are to be master batched, they are preferably master batched into the polycarbonate.

## Glass-filled polycarbonates

Fiber glass may be included as a filler, or a reinforcing agent, in polycarbonates and polycarbonate blends to improve stiffness (modulus) and dimensional stability (coefficient of thermal expansion). Preferably, glass fiber loadings in polycarbonates and polycarbonate blends range from 5 to 50%. As the fiber glass content increases, the polycarbonate exhibits a decrease in melt flow characteristics and an increase in melt viscosity. As a result, it is difficult to generate thin-wall injection molded parts (thickness<1.0 mm) with these kinds of polycarbonate materials. In addition, increasing fiber glass content results in increased surface roughness and lower surface gloss in injection molded parts due to glass fibers breaking through the resin surface.

## Mineral filled polycarbonates

Minerals such as calcium carbonate, talc, silica, wollastonite, clay, calcium sulfate fibers, mica, glass beads, and alumina trihydrate may be included in polycarbonates and polycarbonate blends as is known in the art.

## Metal inserts

Metals useful as the insert of the metal insert moldings of the present invention are not restricted and in principle may include any metal. Preferred examples include, but are not limited to steel, and alloys thereof such as stainless steel, cast iron, tool steel, alloy steel; aluminum,; copper; titanium; magnesium; tin; silver; titanium; and manganese. The metal insert is preferably flat and may be any shape, such as square, rectangular, circular, hexagonal, triangular, and the like.

## EXAMPLES

The non-limiting and non-exhaustive examples that follow are intended to further describe various non-limiting and non-exhaustive embodiments without restricting the scope of the embodiments described in this specification. All quantities given in "parts" and "percents" are understood to be by weight, unless otherwise indicated.

The following materials were used in the Examples:

PC-A a general-purpose polycarbonate, MVR (300 °C/ 1.2 kg) according to ISO 1133 of 34 $cm^3$/10 min, low viscosity, UV stabilized, injection molding - melt temperature of 280 - 320 °C, commercially available from Covestro as MAKROLON 2207;

PC-B a translucent, UV-stabilized, low viscosity, linear polycarbonate based on bisphenol A, MVR (300 °C/ 1.2 kg) according to ISO 1133 of 19 $cm^3$/10 min, commercially available from Covestro as MAKROLON 2407;

PC-C a bisphenol-A based homopolycarbonate resin, low viscosity, MVR (300 °C/ 1.2 kg) according to ISO 1133 of 19 g/10 min., commercially available from Covestro as MAKROLON 2458;

PC-D a polycarbonate, high viscosity, MVR (300 °C/ 1.2 kg) according to ISO 1133 of 6.0 $cm^3$/10 min, commercially available from Covestro as MAKROLON 3158;

PC-E a 10% glass fiber filled polycarbonate, low viscosity, MVR (300 °C/ 1.2 kg) according to ISO 1133 of 12 $cm^3$/10 min, commercially available from Covestro as MAKROLON M410 GF;

PC-F a 20% glass fiber filled polycarbonate, low viscosity, MVR (300 °C/ 1.2 kg) according to ISO 1133 of 8 $cm^3$/10

min, commercially available from Covestro as MAKROLON M420 GF;

PC-G a 30% glass fiber filled polycarbonate, low viscosity, MVR (300 °C/ 1.2 kg) according to ISO 1133 of 7 $cm^3$/10 min, commercially available from Covestro as MAKROLON M430 GF;

PC-H a polycarbonate/acrylonitrile-butadiene-styrene blend with flame retardant, MVR (240 °C/ 5 kg) according to ISO 1133 of 15 $cm^3$/10 min, commercially available from Covestro as BAYBLEND FR3010;

PC-I a 15% glass fiber filled polycarbonate/acrylonitrile-butadiene-styrene-I-FR-blend, MVR (260 °C/ 5 kg) according to ISO 1133 of 23 $cm^3$/10 min, commercially available from Covestro as BAYBLEND FR3060EV;

PC-J a 20% glass fiber filled rubber modified polycarbonate/styrene-acrylonitrile blend, MVR (260 °C/ 5 kg) according to ISO 1133 of 14 $cm^3$/10 min, commercially available from Covestro as BAYBLEND T88GF 20;

PC-K a 31% glass fiber filled rubber modified polycarbonate/styrene-acrylonitrile blend, MVR (260 °C/ 5 kg) according to ISO 1133 of 11 $cm^3$/10 min commercially available from Covestro as BAYBLEND T88GF 30;

PC-L a 20 % mineral filled rubber modified polycarbonate/styrene-acrylonitrile blend, MVR (260 °C/ 5 kg) according to ISO 1133 of 12 $cm^3$/10 min, commercially available from Covestro as BAYBLEND T90MF20;

PC-M a polycarbonate/polyethylene terephthalate blend; unreinforced; flame-retardant, impact modified; injection molding grade, MVR (270 °C/ 5 kg) according to ISO 1133 of 15 $cm^3$/10 min, commercially available from Covestro as MAKROBLEND EL700;

PC-N a polycarbonate/polybutylene terephthalate blend, unreinforced; flame-retardant; UV-stabilized; impact modified; injection molding grade, MVR (260 °C/ 5 kg) according to ISO 1133 of 35 $cm^3$/10 min, commercially available from Covestro as MAKROBLEND M5005FR;

PC-O a polycarbonate/polybutylene terephthalate blend, impact modified, easy release, UV-stabilized, injection molding grade, MVR (260 °C/ 5 kg) according to ISO 1133 of 18 $cm^3$/10 min, commercially available from Covestro as MAKROBLEND UT6007; and

PC-P a moderate thermally conductive polycarbonate, high viscosity, MVR (300 °C/1.2 kg) according to ISO 1133 of 5.0 $cm^3$/10 min, flame retardant, electrically insulating, commercially available from Covestro as MAKROLON TC110FR.

Test molds were constructed with a metal insert which was a 1.5mm thick aluminum plate. The polycarbonate wall stock had an adjustable "C" shaped cross-section. For the detailed investigation, the thickest cross section (6.3mm) max wall stock) was used. As shown in FIG. 1, the horizontal thickness (A) varied from 1mm to 6.3mm. The bite/interface depth (B) was 1.5mm and the vertical thickness (C) varied from 1.5mm to 2.5mm. Thus, the molded part preferably has a horizontal thickness (A) of from 1X to 6.3X, a bite/interface depth (B) of 1.5X, and a vertical thickness (C) of from 1.5X to 2.5X, wherein X=1mm. X can vary from 1mm to 4mm in the present invention.

Each sample was subjected to solvent stress testing (1:10 TnP/1:3 TnP); thermal cycling and shock testing; and mechanical shear tensile testing. In the solvent stress test, TnP is a mixture of toluene and N-propanol in a volume ratio of 1-3 which is used to detect residual stress levels of 10 N/$mm^2$ and above. This mixture was added during three minutes to the examined sample whereafter the sample was visually observed for breaks and cracks. The 1:3 TnP test can detect a stress threshold of ~10 MPa (1450 psi) and is typically used for as-molded parts or assemblies. A 1:10 TnP test detects a stress threshold of ~20 MPa (2900 psi) and is typically used for assembled parts where external stressors could have been applied (less severe test).

The thermal test was a thermal cycling/shock screening involving 100 cycles between 80°C to -40°C to -80°C, followed by one air-to-liquid thermal shock, 80 to 23°C. Thermal test results for a standard polycarbonate (PC-B) and two polycarbonate blends (PC-H and PC-1) are summarized in Table I in which F=fail; VC=visible craze; and P=pass.

**Table I**

| **Polycarbonate** | **Vertical thickness/Horizonal thickness** | | | | | | | |
|---|---|---|---|---|---|---|---|---|
| | **1.5/1** | **1.5/2.5** | **1.5/3** | **1.5/6.3** | **2.5/1** | **2.5/2.5** | **2.5/3** | **2.5/6.3** |
| **PC-B** | F | VC | P | VC | P | P | VC | VC |

(continued)

| Polycarbonate | Vertical thickness/Horizonal thickness | | | | | | | |
|---|---|---|---|---|---|---|---|---|
| | 1.5/1 | 1.5/2.5 | 1.5/3 | 1.5/6.3 | 2.5/1 | 2.5/2.5 | 2.5/3 | 2.5/6.3 |
| **PC-B** | F | VC | P | VC | P | P | VC | VC |
| **PC-B** | F | VC | P | P | P | P | P | VC |
| **PC-H** | F | P | F | F | F | P | P | P |
| **PC-H** | F | P | P | P | P | P | P | P |
| **PC-H** | P | P | P | P | P | P | P | P |
| **PC-I** | P | P | P | P | P | P | P | P |
| **PC-I** | P | P | P | P | P | P | P | P |
| **PC-I** | P | P | P | P | P | P | P | P |

The present inventors found that although PC-1 had no failures, for the more generic materials (PC-B and PC-H) greater success was observed with thicker profiles. The best performance was seen in the mineral-filled polycarbonate blends at the thickest profile. FIG. 1 shows the test mold used in producing the metal in mold of the invention.

**Table II**

| Trial 1 | Percentage of samples without crazing or ultimate failure | | |
|---|---|---|---|
| | PC-B | PC-H | PC-I |
| Minimum wall stock <2.54mm | 40 | 72 | 100 |
| Minimum wall stock ≥2.54mm | 44 | 88 | 100 |

The best performance was observed in mineral-filled polycarbonate blends as can be appreciated by reference to Tables II and III. Minimal failure in the thickest cross-sectional metal insert parts with any failures seen at the gate. Other samples were molded in the thickest profile and subjected to thermal testing. As can be appreciated by reference to Table III, those samples were PC-P, PC-H, PC-M, and PC-N and all passed the thermal test.

As part design plays a role in metal insert molding, the present inventors would not normally recommend a thick profile, however, for successful metal insert molding with polycarbonate one needs a very thick profile.

**Table III**

| Ex. No. | Polycarbonate | Percentage of Trial 2 passing samples |
|---|---|---|
| **III-1** | PC-B | 100 |
| **III-2** | PC-P | 100 |
| **III-3** | PC-H | 100 |
| **III-4** | PC-I | 100 |
| **III-5** | PC-M | 100 |
| **III-6** | PC-N | 100 |

The pack pressure (psi) was varied for a standard polycarbonate (PC-B) to determine the optimal pack pressure necessary for metal insert molding (5,000 / 10,000, 15,000, 18,000 psi) and the results are summarized in Table IV. Voids were visible @ 5,000 / 10,000 psi = failure (F). Pack pressure is a controllable setting on the injection molding machines. All samples passed (P) the 1:10 TnP solvent stress test, the estimated molded stress < 20 Mpa. All samples showed visible craze (VC) at 1:3 TnP, with the estimated molded stresses > 10 Mpa. The least amount of crazing was seen in a part molded with 15,000 psi. The results are summarized in Table IV.

**Table IV**

| Ex. No. | Pack pressure (psi) | Solvent stress test | | Thermal test |
|---|---|---|---|---|
| | | 1:10 TnP | 1:3 TnP | |
| **IV-1** | 5,000 | F | F | F |
| **IV-2** | 10,000 | F | F | F |
| **IV-3** | 15,000 | P | VC | P |
| **IV-4** | 18,000 | P | VC | P |

The viscosity of the materials was examined to understand the effect of injection pressure vs. pack pressure. As can be appreciated by reference to Table IV, PC-A (low viscosity) flowed the best), PC-B (medium viscosity), and PC-D (high viscosity) had low flow. All three polycarbonates were molded with a 15,000-psi pack pressure.

The recommendation in the art for metal insert molding in plastic has been that the pack pressure should be approximately 75% of the injection pressure. As can be appreciated by review of the instant data, metal insert molding in polycarbonate requires higher pack pressure than normal injection molding. The processing settings are detailed below.

| Processing settings | PC-A | PC-B | PC-D |
|---|---|---|---|
| Injection Pressure (psi) | 9,578 | 11,352 | 19,717 |
| Pack Pressure (psi) | 15,000 | 15,000 | 15,000 |
| Ratio (%) | 156% | 132% | 76% |

**Table V**

| Ex. No. | Polycarbonate | Pack pressure (psi) | Cooling time (sec) | Solvent stress test | | Thermal test |
|---|---|---|---|---|---|---|
| | | | | 1:10 TnP | 1:3 TnP | |
| **V-1** | PC-A | 15,000 | 20 | P | VC | VC |
| **V-2** | PC-A | 15,000 | 40 | P | VC | P |
| **V-3** | PC-B | 15,000 | 20 | P | VC | P |
| **V-4** | PC-B | 15,000 | 40 | P | VC | P |
| **V-5** | PC-D | 15,000 | 20 | F | F | F |
| **V-6** | PC-D | 15,000 | 40 | F | F | F |
| **V-7** | PC-D | 19,000 | 20 | P | VC | P |
| **V-8** | PC-D | 19,000 | 40 | P | VC | P |

As can be appreciated by reference to Table V, those samples (Ex. V-5 and V-6) molded with PC-D with 15,000-psi pack pressure failed all testing. This indicates that the state of the art 75% ratio does not work for metal insert molding of polycarbonate. Where the pack pressure was increased to 19,000 psi for PC-D (Ex. V-7 and V-8) the samples passed, indicating that a higher pack pressure is necessary for metal insert molding, as polycarbonates require a higher pack pressure than normal injection molding.

The performance of glass-filled polycarbonates (PC-E, PC-F, and PC-G) was examined, and the results are summarized in Table VI in which F=fail; VC= visible craze; and P=pass. All these materials were of a similar formulation: PC-C (PC + 0.4% PET mold release) containing 10%, 20%, and 30% chopped glass fibers, respectively. Cracks found on PC-F were identified under a microscope. More glass fibers reduced the risk of cracking. Higher glass fiber loading reduced the stress cracking tendency because these materials underwent less shrinking. Thus, the present inventors recommend glass-filled polycarbonates at 20% loading or higher for metal insert molding.

Table **VI**

| Ex. No. | Glass-filled polycarbonate | Pack pressure (psi) | Cooling time (sec) | Solvent stress test | | Thermal test |
|---|---|---|---|---|---|---|
| | | | | 1:10 TnP | 1:3 TnP | |
| **VI-1** | PC-E | 15,000 | 20 | VC | VC | P |
| **VI-2** | PC-E | 15,000 | 40 | VC | VC | P |
| **VI-3** | PC-E | 18,000 | 20 | VC | VC | P |
| **VI-4** | PC-E | 18,000 | 40 | VC | VC | P |
| **VI-5** | PC-F | 15,000 | 20 | P | VC | P |
| **VI-6** | PC-F | 15,000 | 40 | P | VC | P |
| **VI-7** | PC-F | 18,000 | 20 | P | P | P |
| **VI-8** | PC-F | 18,000 | 40 | P | P | P |
| **VI-9** | PC-G | 15,000 | 20 | P | P | P |
| **VI-10** | PC-G | 15,000 | 40 | P | P | P |
| **VI-11** | PC-G | 18,000 | 20 | P | P | P |
| **VI-12** | PC-G | 18,000 | 40 | P | P | P |

A comparison of glass-filled polycarbonate blends (PC-J, PC-K, and PC-1) is summarized in Table VII in which F=fail; and P=pass. All the samples passed solvent stress testing, except PC-1 @ 15,000 psi and 20 seconds cooling time. These parts had voids around the exterior of the part, indicating that the material needed a higher pack pressure and a longer cooling time.

More glass fibers reduced the risk of cracking. Blends tended to have a higher resistance to stress cracking. Based on these data, the present inventors recommend glass-filled polycarbonates (at a glass loading higher than 15%) for metal insert molding with the correct geometry and processing conditions.

The performance of mineral-filled polycarbonate blends PC-L and PC-O was assessed, and the results are provided in Table VIII in which P=pass. As can be appreciated by reference to Table VIII, more mineral reduced the risk of cracking and mineral-filled blends tended to show higher resistance to stress cracking.

**Table VII**

| Ex. No. | Glass-filled polycarbonate blend | Pack pressure (psi) | Cooling time (sec) | Solvent stress test | | Thermal test |
|---|---|---|---|---|---|---|
| | | | | 1:10 TnP | 1:3 TnP | |
| **VII-1** | PC-J | 15,000 | 20 | P | P | P |
| **VII-2** | PC-J | 15,000 | 40 | P | P | P |
| **VII-3** | PC-J | 18,000 | 20 | P | P | P |
| **VII-4** | PC-J | 18,000 | 40 | P | P | P |
| **VII-5** | PC-K | 10,000 | 20 | P | P | P |
| **VII-6** | PC-K | 10,000 | 40 | P | P | P |
| **VII-7** | PC-K | 15,000 | 20 | P | P | P |
| **VII-8** | PC-K | 15,000 | 40 | P | P | P |
| **VII-9** | PC-I | 15,000 | 20 | F | F | F |
| **VII-10** | PC-I | 15,000 | 40 | P | P | P |
| **VII-11** | PC-I | 18,000 | 20 | P | P | P |
| **VII-12** | PC-I | 18,000 | 40 | P | P | P |

As can be appreciated by reference to Table VIII, more glass fibers reduced the risk of cracking and blends tended to have a higher resistance to stress cracking. PC-L was 20% mineral-filled, whereas PC-O contained an impact modifier and a UV stabilizer. All samples passed testing. More mineral content reduced the risk of cracking with mineral-filled blends tending to have a higher resistance to stress cracking. These types of materials should only be chosen for specific applications but pass the requirements of the test. Glass-filled polycarbonates and polycarbonate blends are more likely to be used in applications where metal insert molding is used.

**Table VIII**

| Ex. No. | Mineral-filled polycarbonate blend | Pack pressure (psi) | Cooling time (sec) | Solvent stress test | | Thermal test |
|---|---|---|---|---|---|---|
| | | | | 1:10 TnP | 1:3 TnP | |
| **VIII-1** | PC-L | 15,000 | 20 | P | P | P |
| **VIII-2** | PC-L | 15,000 | 40 | P | P | P |
| **VIII-3** | PC-L | 18,000 | 20 | P | P | P |
| **VIII-4** | PC-L | 18,000 | 40 | P | P | P |
| **VIII-5** | PC-O | 15,000 | 20 | P | P | P |
| **VIII-6** | PC-O | 15,000 | 40 | P | P | P |
| **VIII-7** | PC-O | 18,000 | 20 | P | P | P |
| **VIII-8** | PC-O | 18,000 | 40 | P | P | P |

FIG. 2 depicts a cross section through a metal insert molding of the invention. FIG. 3 illustrates a cross section through a metal insert molding of the invention. FIG. 4 is a cross section through a metal insert molding of the invention. FIG. 5 provides a cross section through a metal insert molding of the invention.

Computer thermal simulations were conducted on 6.3mm polycarbonate wall stock and on 1.0mm polycarbonate wall stock. The thicker cross-section had a slightly lower strain. The thicker sheet was primarily needed for sufficient packing to minimize shrinkage stress. These simulation results confirm the results found in physical testing.

As can be appreciated from the foregoing, the geometric design of the encapsulated area is important with thicker-cross sections showing greater improvement for molding success. Metal insert molding with polycarbonates and blends also requires higher pack pressures for successful performance. Glass-filled and mineral-filled polycarbonates and polycarbonate blends tend to have lower shrinkage resulting in lower shrinkage stresses, which help reduce the chance of cracking. Specific polycarbonates and polycarbonate blends can be utilized in metal insert molding for a given level of chemical resistance, thermal expansion, and mechanical shear. The inventive metal insert moldings can provide parts for a variety of industries including automotive parts, electronics parts, and medical device parts which have improved functional or mechanical properties versus overmolded parts.

This specification has been written with reference to various non-limiting and non-exhaustive embodiments. However, it will be recognized by persons having ordinary skill in the art that various substitutions, modifications, or combinations of any of the disclosed embodiments (or portions thereof) may be made within the scope of this specification. Thus, it is contemplated and understood that this specification supports additional embodiments not expressly set forth herein. Such embodiments may be obtained, for example, by combining, modifying, or reorganizing any of the disclosed steps, components, elements, features, aspects, characteristics, limitations, and the like, of the various non-limiting embodiments described in this specification. In this manner, Applicant reserves the right to amend the claims during prosecution to add features as variously described in this specification, and such amendments comply with the requirements of 35 U.S.C. §112(a), and 35 U.S.C. §132(a).

Various aspects of the subject matter described herein are set out in the following clauses:

In a first aspect, the invention is directed to a metal insert molding comprising: a metal plate encapsulated in a thermoplastic resin composition comprising, (a) an aromatic polycarbonate, (b) a polyether polyol and optionally, (c) at least one additive selected from the group consisting of flame retardants, antidripping agents, impact modifiers, fillers, antistats, coloring agents, pigments, thermal stabilizers different from component (b), lubricants, demolding agents, ultraviolet absorbers, infrared absorbers, hydrolysis stabilizers, and compatibilizers; and wherein the metal insert molding has a horizontal thickness (A) of from 1.0X to 6.3X, a bite/interface depth (B) of 1.5X, and a vertical thickness (C) of from 1.5X to 2.5X.

In a second aspect, the invention is directed to the metal insert molding according to the previous paragraph, wherein the thermoplastic resin composition further comprises a second polymer selected from the group consisting of

acrylonitrile-styrene-butadiene, acrylonitrile-styrene-acrylate, styrene-acrylonitrile, polyethylene terephthalate, and polybutylene terephthalate.

In a third aspect, the invention is directed to the metal insert molding according to one of the two previous paragraphs, wherein the metal is selected from the group consisting of steel, stainless steel, cast iron, tool steel, alloy steel, aluminum, copper, titanium, magnesium, tin, silver, titanium, and manganese.

In a fourth aspect, the invention is directed to the metal insert molding according to any one of the three previous paragraphs, wherein the additive is a filler selected from the group consisting of glass fibers, carbon fibers, cellulosics, graphite, graphene, carbon nanotubes, chalk, quartz powder, titanium dioxide, silicates, talc, wollastonite, montmorillonite, kaolin, zeolite, vermiculite, aluminum oxide, and silica.

In a fifth aspect, the invention is directed to the metal insert molding according to any one of the four previous paragraphs, wherein X=1mm to 4mm.

In a sixth aspect, the invention is directed to a part comprising the metal insert molding according to any one of the five previous paragraphs.

In a seventh aspect, the invention is directed to a process of producing a metal insert molding comprising: encapsulating a metal plate within a thermoplastic resin composition comprising, a) an aromatic polycarbonate, b) a polyether polyol and optionally, c) at least one additive selected from the group consisting of flame retardants, antidripping agents, impact modifiers, fillers, antistats, coloring agents, pigments, thermal stabilizers different from component b, lubricants, demolding agents, ultraviolet absorbers, infrared absorbers, hydrolysis stabilizers, and compatibilizers, at a ratio of pack pressure to injection pressure of greater than 0.75, wherein the metal insert molding has a horizontal thickness (A) of from 1.0X to 6.3X, a bite/interface depth (B) of 1.5X, and a vertical thickness (C) of from 1.5X to 2.5X.

In an eighth aspect, the invention is directed to the process according to the previous paragraph, wherein the ratio of pack pressure to injection pressure is greater than 1.3.

In a ninth aspect, the invention is directed to the process according to the previous paragraph, wherein the ratio of pack pressure to injection pressure is greater than 1.5.

In a tenth aspect, the invention is directed to the process according to any one of the three previous paragraphs, wherein the thermoplastic resin composition further comprises a second polymer selected from the group consisting of acrylonitrile-styrene-butadiene, acrylonitrile-styrene-acrylate, styrene-acrylonitrile, polyethylene terephthalate, and polybutylene terephthalate.

In an eleventh aspect, the invention is directed to the process according to any one of the four previous paragraphs, wherein the metal is selected from the group consisting of steel, stainless steel, cast iron, tool steel, alloy steel, aluminum, copper, titanium, magnesium, tin, silver, titanium, and manganese.

In a twelfth aspect, the invention is directed to the process according to any one of the five previous paragraphs, wherein the additive is a filler selected from the group consisting of glass fibers, carbon fibers, cellulosics, graphite, graphene, carbon nanotubes, chalk, quartz powder, titanium dioxide, silicates, talc, wollastonite, montmorillonite, kaolin, zeolite, vermiculite, aluminum oxide, and silica.

In a thirteenth aspect, the invention is directed to the process according to any one of the six previous paragraphs, wherein X=1mm to 4mm

In a fourteenth aspect, the invention is directed to a part comprising the metal insert molding produced according to the process of any one of the previous seven paragraphs.

In a fifteenth aspect, the invention is directed to the part according to one of the sixth aspect and the fourteenth aspect, wherein the part is selected from the group consisting of an automotive part, an electronics part, and a medical device part.

## Claims

**1.** A metal insert molding comprising:

a metal plate encapsulated in a thermoplastic resin composition comprising,

(a) an aromatic polycarbonate,
(b) a polyether polyol and optionally,
(c) at least one additive selected from the group consisting of flame retardants, antidripping agents, impact modifiers, fillers, antistats, coloring agents, pigments, thermal stabilizers different from component (b), lubricants, demolding agents, ultraviolet absorbers, infrared absorbers, hydrolysis stabilizers, and compatibilizers; and

wherein the metal insert molding has a horizontal thickness (A) of from 1.0X to 6.3X, a bite/interface depth (B) of

1.5X, and a vertical thickness (C) of from 1.5X to 2.5X.

**2.** The metal insert molding according to claim 1, wherein the thermoplastic resin composition further comprises a second polymer selected from the group consisting of acrylonitrile-styrene-butadiene, acrylonitrile-styrene-acrylate, styrene-acrylonitrile, polyethylene terephthalate, and polybutylene terephthalate.

**3.** The metal insert molding according to one of claims 1 and 2, wherein the metal is selected from the group consisting of steel, stainless steel, cast iron, tool steel, alloy steel, aluminum, copper, titanium, magnesium, tin, silver, titanium, and manganese.

**4.** The metal insert molding according to any one of claims 1 to 3, wherein the additive is a filler selected from the group consisting of glass fibers, carbon fibers, cellulosics, graphite, graphene, carbon nanotubes, chalk, quartz powder, titanium dioxide, silicates, talc, wollastonite, montmorillonite, kaolin, zeolite, vermiculite, aluminum oxide, and silica.

**5.** The metal insert molding according to any one of claims 1 to 4, wherein X=1mm to 4mm.

**6.** A part comprising the metal insert molding according to any one of claims 1 to 5.

**7.** A process of producing a metal insert molding comprising:

encapsulating a metal plate within a thermoplastic resin composition comprising,

a) an aromatic polycarbonate,
b) a polyether polyol and optionally,
c) at least one additive selected from the group consisting of flame retardants, antidripping agents, impact modifiers, fillers, antistats, coloring agents, pigments, thermal stabilizers different from component b, lubricants, demolding agents, ultraviolet absorbers, infrared absorbers, hydrolysis stabilizers, and compatibilizers,

at a ratio of pack pressure to injection pressure of greater than 0.75,
wherein the metal insert molding has a horizontal thickness (A) of from 1.0X to 6.3X, a bite/interface depth (B) of 1.5X, and a vertical thickness (C) of from 1.5X to 2.5X.

**8.** The process according to claim 7, wherein the ratio of pack pressure to injection pressure is greater than 1.3.

**9.** The process according to claim 8, wherein the ratio of pack pressure to injection pressure is greater than 1.5.

**10.** The process according to any one of claims 7 to 9, wherein the thermoplastic resin composition further comprises a second polymer selected from the group consisting of acrylonitrile-styrene-butadiene, acrylonitrile-styrene-acrylate, styrene-acrylonitrile, polyethylene terephthalate, and polybutylene terephthalate.

**11.** The process according to any one of claims 7 to 10, wherein the metal is selected from the group consisting of steel, stainless steel, cast iron, tool steel, alloy steel, aluminum, copper, titanium, magnesium, tin, silver, titanium, and manganese.

**12.** The process according to any one of claims 7 to 11, wherein the additive is a filler selected from the group consisting of glass fibers, carbon fibers, cellulosics, graphite, graphene, carbon nanotubes, chalk, quartz powder, titanium dioxide, silicates, talc, wollastonite, montmorillonite, kaolin, zeolite, vermiculite, aluminum oxide, and silica.

**13.** The process according to any one of claims 7 to 12, wherein X=1mm to 4mm

**14.** A part comprising the metal insert molding produced according to the process of any one of claims 7 to 13.

**15.** The part according to one of claims 6 and 14, wherein the part is selected from the group consisting of an automotive part, an electronics part, and a medical device part.

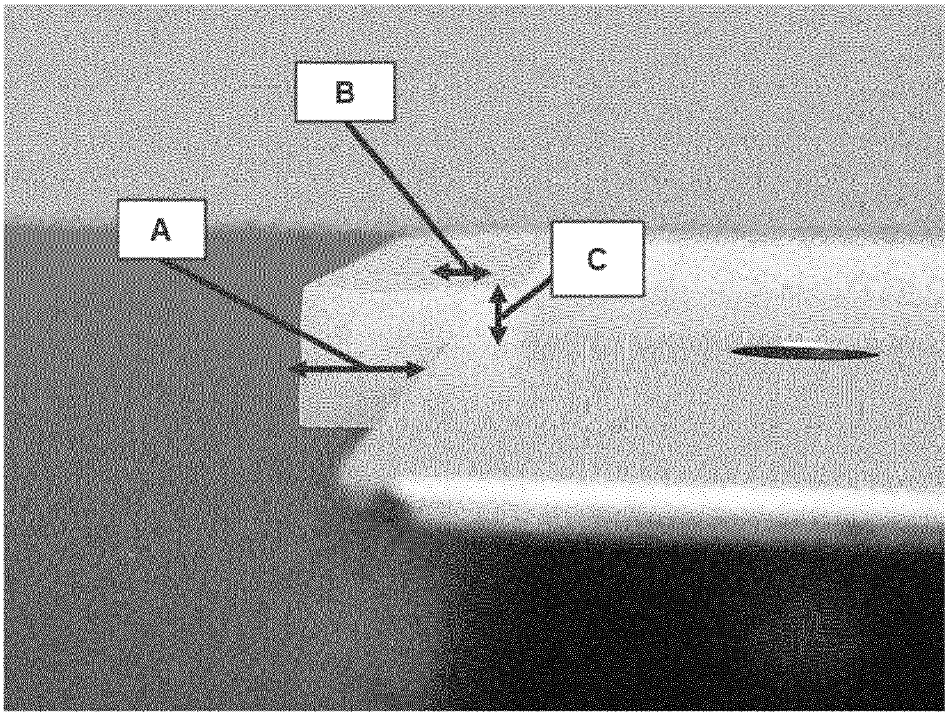


FIG. 1

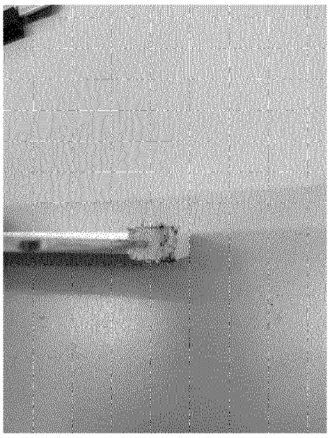

FIG. 2

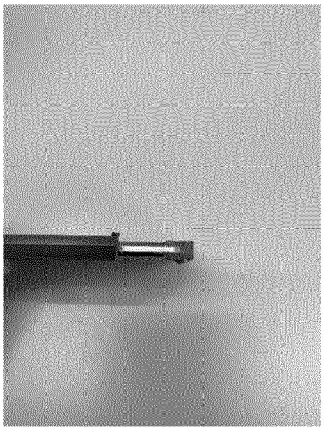

FIG. 3

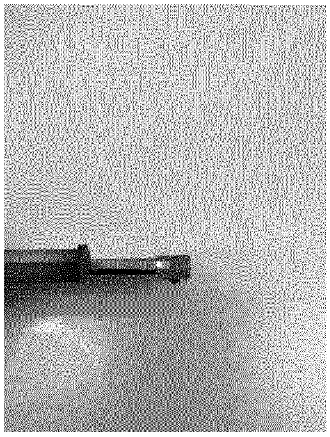

FIG. 4

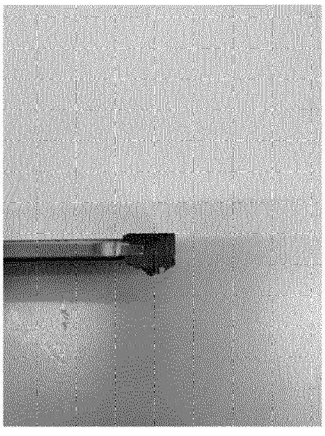

FIG. 5

Europäisches Patentamt
European Patent Office
Office européen des brevets

# EUROPEAN SEARCH REPORT

Application Number
EP 23 20 9070

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 3 674 368 A1 (MITSUBISHI ENG PLASTICS CORP [JP]) 1 July 2020 (2020-07-01)<br>* paragraphs [0014] - [0088] *<br>* paragraphs [0103] - [0111], [0146], [0320] - [0322] *<br>* figures 1, 2 *<br>----- | 1-15 | INV.<br>B29C45/00<br>B29C45/14<br>B29K69/00<br>B29K71/00<br>B29K705/00<br>C08L69/00<br>C08L71/00 |
| Y | US 2021/179845 A1 (WANDNER DERK ERICH [DE] ET AL) 17 June 2021 (2021-06-17)<br>* paragraphs [0010] - [0037] *<br>* paragraphs [0070] - [0072] *<br>----- | 1-15 | |
| Y | US 2013/052465 A1 (SHEN QINGYA [CN] ET AL) 28 February 2013 (2013-02-28)<br>* paragraphs [0004] - [0011], [0097] - [0099], [0111] - [0123]; figures 1-9B *<br>----- | 1-15 | |

TECHNICAL FIELDS SEARCHED (IPC)

B29C
C08L

The present search report has been drawn up for all claims

1

| Place of search | Date of completion of the search | Examiner |
|---|---|---|
| Munich | 9 April 2024 | Raicher, Gerald |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 23 20 9070

This annex lists the patent family members relating to the patent documents cited in the above-mentioned European search report. The members are as contained in the European Patent Office EDP file on
The European Patent Office is in no way liable for these particulars which are merely given for the purpose of information.

09-04-2024

| Patent document cited in search report | Publication date | Patent family member(s) | Publication date |
|---|---|---|---|
| EP 3674368 A1 | 01-07-2020 | CN 111108155 A | 05-05-2020 |
| | | EP 3674368 A1 | 01-07-2020 |
| | | JP 7177780 B2 | 24-11-2022 |
| | | JP WO2019069839 A1 | 22-10-2020 |
| | | WO 2019069839 A1 | 11-04-2019 |
| US 2021179845 A1 | 17-06-2021 | CN 112020540 A | 01-12-2020 |
| | | EP 3781630 A1 | 24-02-2021 |
| | | JP 7324227 B2 | 09-08-2023 |
| | | JP 2021531356 A | 18-11-2021 |
| | | KR 20200143388 A | 23-12-2020 |
| | | US 2021179845 A1 | 17-06-2021 |
| | | WO 2019201816 A1 | 24-10-2019 |
| US 2013052465 A1 | 28-02-2013 | CN 103764366 A | 30-04-2014 |
| | | CN 106945227 A | 14-07-2017 |
| | | EP 2747979 A2 | 02-07-2014 |
| | | EP 3132911 A1 | 22-02-2017 |
| | | US 2013052465 A1 | 28-02-2013 |
| | | US 2014170397 A1 | 19-06-2014 |
| | | WO 2013027167 A2 | 28-02-2013 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5097002 A
- US 5340905 A
- US 5717057 A
- US 6596840 B
- US 6740730 B
- US 7071284 B
- US 2991273 A
- US 2999835 A
- US 2999846 A
- US 3148172 A
- US 3271367 A
- US 4982014 A
- DE 2036052 A
- DE 3832396 A
- FR 1561518 A1
- GB 1122003 A
- GB 1229482 A
- GB 1341318 A
- GB 1367790 A
- US 5288778 A
- US 5821380 A
- US 5883165 A
- US 7074351 B
- US 7169834 B
- US 8153239 B
- US 20050165148 A
- US 3644574 A
- DE 2035390
- DE 2248242
- GB 1409275 A
- US 2465319 A, Winfield
- US 2597643 A


### Non-patent literature cited in the description


- Chemistry and Physics of Polycarbonates. **SCHNELL**. Polymer Reviews. Interscience Publishers, 1964, vol. 9
- Polycarbonates. **D. FREITAG** ; **U. GRIGO** ; **P.R. MÜLLER** ; **H. NOUVERTNÉ**. Encyclopedia of Polymer Science and Engineering. BAYER AG, 1988, vol. 11, 648-718
- Polycarbonate'' [Polycarbonates. **U. GRIGO** ; **K. KIRCHNER** ; **P.R. MÜLLER** ; **BECKER** ; **BRAUN**. Kunststoff-Handbuch [Plastics Handbook. Carl Hanser Verlag, 1992, vol. 3/1, 117-299
- **H. SCHNELL**. Chemistry and Physics of Polycarbonates. Interscience Publishers, 1964, 28, 102
- **D.G. LEGRAND** ; **J.T. BENDLER**. Handbook of Polycarbonate Science and Technology. Marcel Dekker, 2000, 72
- Plastics Additives Handbook. Hanser Verlag, 2000
- *CHEMICAL ABSTRACTS*, 23949-66-8
- **W. SCHOLTAN** ; **H. LANGE**. Colloid and Polymer Science. 1972, vol. 250, 782-796
- Ullmann's Encyclopedia of Chemical Technology. 1980, vol. 19, 280